# FASCICULE DE BREVET EUROPEEN

(11) **EP 0 461 992 B1**
(45) Date de publication et mention de la délivrance du brevet: **05.10.1994**
(21) Numéro de dépôt: 91401540.9
(22) Date de dépôt: 11.06.1991
(51) Int. Cl.: G01P 1/04

(54) **Capteur de mesure, notamment capteur de vitesse pour véhicule automobile**
Messaufnehmer, insbesondere Geschwindigkeitsmessaufnehmer für Kraftfahrzeuge
Measuring device, especially speed sensor for motor-vehicle

(30) Priorité: 14.06.1990 FR 9007397
(43) Date de publication de la demande: 18.12.1991
(73) Titulaire: SAGEM ALLUMAGE, F-75783 Paris Cédex 16 (FR)
(72) Inventeur: Plantin, Denis, F-63570 Brassac-Les-Mines (FR)
(74) Mandataire: Bloch, Gérard

(56) Documents cités:
- GB-A- 2 196 435
- US-A- 4 646 042

## Description

La présente invention concerne d'une manière générale un capteur tel que ceux utilisés par exemple pour mesurer la vitesse de rotation sur une boîte de vitesses d'un véhicule automobile, par exemple un capteur tel que décrit dans le document US-A-4 646 042 sur lequel est fondé le préambule de la revendication 1.

Un tel capteur comprend un corps présentant des moyens permettant sa fixation, et à l'intérieur duquel tourillonne un arbre dont l'une des extrémités faisant saillie par rapport audit corps vient s'enclencher dans l'organe dont il faut mesurer la vitesse.

A l'intérieur du corps est positionnée une plaque comprenant sur l'une de ses faces un organe de détection de rotation et sur l'autre face un circuit électronique dont le rôle est de mettre en forme et transmettre les signaux mesurés. L'organe de détection qui est fixe se trouve en vis-à-vis, par exemple, d'aimants permanents répartis angulairement de manière uniforme et rendus solidaires par tout moyen approprié de l'arbre tournant.

Un capteur de ce type, lorsqu'il est monté dans le capot moteur d'un véhicule automobile, est soumis à des agressions mécaniques de toute sorte, et il est donc nécessaire de parfaitement protéger tous les éléments qui se trouvent à l'intérieur du corps, autrement dit il faut assurer une étanchéité parfaite de l'intérieur du corps par rapport à l'environnement extérieur.

Le circuit électronique doit, d'une part, être alimenté en courant électrique, et, d'autre part, transmettre les signaux de mesure à distance, ces fonctions étant réalisées par des conducteurs électriques.

Une solution connue pour résoudre l'ensemble de ces problèmes d'étanchéité est de fixer par tout moyen approprié un bouchon à une extrémité du corps ; on ménage dans ce bouchon autant de passages cylindriques qu'il y a de conducteurs électriques et l'on assure l'étanchéité de ces passages au moyen par exemple de passe-fils.

Cette solution présente plusieurs inconvénients. En effet avant de fixer le bouchon au corps, il est nécessaire de faire passer les conducteurs au travers des passages cylindriques, puis de les équiper de leurs passes-fils. Cette série d'opérations est longue et donc coûteuse, car il est pratiquement impossible de la rendre automatisable. Par ailleurs, la manipulation manuelle des conducteurs entraîne obligatoirement une fragilisation de ceux-ci et donc des risques non négligeables de non-fonctionnement du capteur.

Il en résulte pour l'ensemble du capteur une augmentation de coût incompatible avec une production en grande série comme c'est le cas dans le domaine de l'automobile.

La présente invention remédie à ces inconvénients et propose à cet effet un capteur de mesure selon la revendication 1.

De manière préférentielle ladite échancrure présente une partie centrale raccordée à la périphérie extérieure de la collerette et l'embase par des arcs de cercle et des flancs droits.

Un autre aspect préférentiel de la présente invention est que ladite paroi en saillie constitue des moyens de maintien de la plaque dans le corps.

L'invention sera mieux comprise à la lecture de la description détaillée qui va suivre en référence aux dessins annexés dans lesquels:
- la figure 1 est une vue en coupe d'un capteur de mesure complètement équipé suivant l'invention ;
- la figure 2 est une vue de dessous d'un bouchon de fermeture suivant l'invention ;
- la figure 3 est une vue en coupe du bouchon de fermeture suivant la ligne III-III de la figure 2 ;
- la figure 4 est une vue en coupe du bouchon de fermeture suivant la ligne IV-IV de la figure 3;
- la figure 5 est une vue en coupe du bouchon de fermeture suivant la ligne V-V de la figure 3.

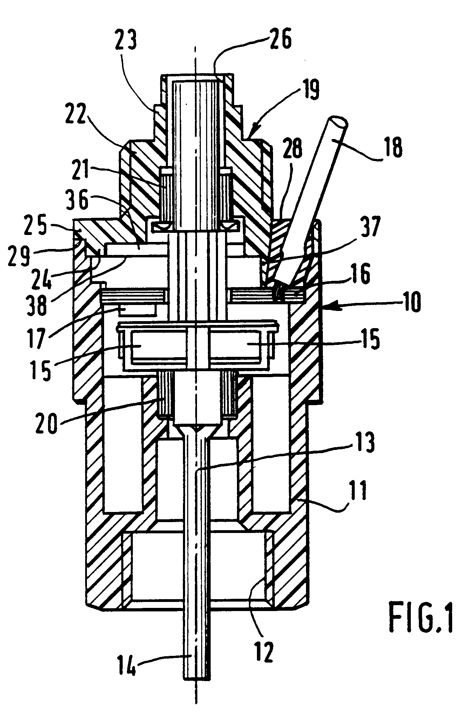

La figure 1 illustre l'ensemble d'un capteur de vitesse 10 suivant l'invention.

Ce capteur 10 est constitué d'un corps 11 de forme générale cylindrique réalisé par moulage en matière isolante. Le corps 11 comprend à l'une de ses extrémités un alésage fileté 12 constituant les moyens de fixation du capteur 10, par exemple sur une boîte de vitesses de véhicule automobile.

A l'intérieur du corps 11 tourillonne un arbre 13 également réalisé par moulage de matière plastique et dont l'extrémité 14 faisant saillie par rapport au corps 11 vient s'enclencher dans l'organe dont il faut mesurer la vitesse, ladite extrémité 14 constituant ainsi la prise d'informations du capteur.

Solidaires de l'arbre 13, sont disposés des aimants permanents 15 répartis angulairement de manière uniforme et, alternativement, de polarités Nord et Sud.

A l'intérieur du corps 11 est positionnée une plaque 16 sur la face inférieure de laquelle est fixée un organe de détection 17 en vis-à-vis des aimants 15.

Les signaux émis par cet organe de détection sont traités par un circuit électronique dont les composants sont incorporés à la plaque 16.

Ces éléments ne faisant pas partie de la présente invention ne sont ni décrits ni représentés.

L'alimentation électrique du circuit électronique et la transmission à distance des signaux se fait à l'aide de conducteurs électriques, tel que celui représenté sur la figure 1 et portant le repère 18.

Le capteur 10 comporte également un bouchon de fermeture 19 qui doit assurer les fonctions d'étanchéité et donc de protection de tous les éléments disposés à l'intérieur du corps 11.

Le guidage en rotation de l'arbre 13 s'effectue par deux portées métalliques 20,21, l'une étant située dans la partie médiane du corps 11, et l'autre étant située dans la partie médiane du bouchon de fermeture 19.

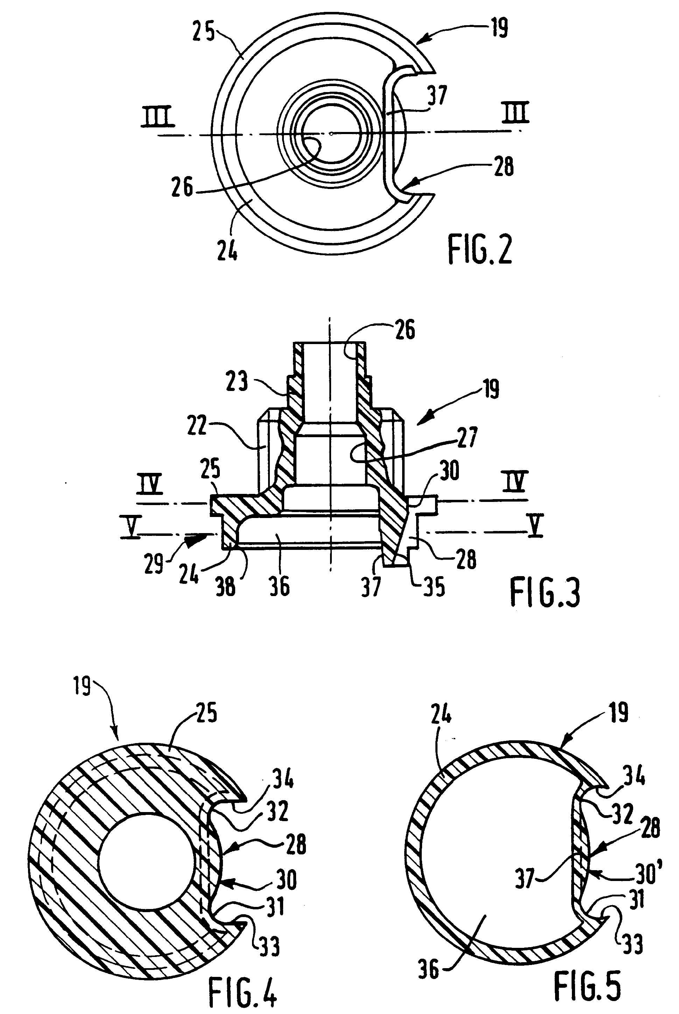

On se réfère maintenant aux figures 2 à 5 qui illustrent les détails du bouchon de fermeture 19 suivant l'invention.

Le bouchon de fermeture 19 a une forme générale tubulaire et comporte dans sa partie centrale un manchon fileté 22 prolongé à sa partie supérieure par un embout 23.

Le manchon fileté 22 se raccorde à sa partie inférieure à une collerette 25 dont le diamètre extérieur correspond au diamètre extérieur du corps 11. Cette collerette 25 est prolongée par une embase 24 dont le diamètre extérieur correspond au diamètre intérieur du corps 11. Il en résulte un épaulement 29 qui va constituer comme on le voit sur la figure 1 la face d'appui du bouchon de fermeture 19 sur le corps 11.

L'embout 23 présente dans sa partie centrale un alésage 26 raccordé à son extrémité inférieure par une partie tronconique à un alésage 27 de plus grand diamètre.

Ainsi qu'on peut le voir sur la figure 1, l'alésage 27 reçoit la portée métallique 21 et l'alésage 26 sert de logement à l'extrémité supérieure de l'arbre 13.

Suivant l'invention, le bouchon de fermeture 19 comporte à la périphérie extérieure de la collerette 25 et de l'embase 24 une échancrure 28 à section variable.

Au niveau de la collerette 25 l'échancrure 28 présente une section illustrée par la figure 4 comportant une partie centrale 30 concentrique raccordée à la périphérie extérieure de la collerette 25 par des arcs de cercle 31,32 suivis de flancs droits 33,34.

Au niveau de l'embase 24, l'échancrure 28 comporte un évasement suivant le pan incliné 35 (figure 3) et présente une section illustrée par le figure 5 où l'on retrouve les mêmes éléments principaux que dans la figure 4 avec une partie centrale 30′ qui n'est plus concentrique mais présente un léger bombé et constitue avec un évidement interne 36 de l'embase 24 une paroi 37.

Comme on peut le voir en particulier sur les figures 2 et 3, cette paroi 37 se prolonge au-delà de la face inférieure 38 de l'embase 24 pour des raisons qui seront explicitées ci-après.

Le bouchon de fermeture 19 doit assurer pour un capteur 10 de ce type une étanchéité complète vis-à-vis de l'extérieur des éléments situés à l'intérieur du corps 11 tout en permettant le passage des fils 18, passage devant lui aussi, présenter une étanchéité parfaite.

L'équipement du capteur 10 se fait de la manière suivante. L'arbre 13 équipé des aimants 15 est introduit dans le corps 11, puis on met en place dans ledit corps 11 la plaque 16 équipée de l'organe de détection 17 et des conducteurs électriques 18. Le bouchon de fermeture 19 est alors mis en place sur le corps 11 où il repose par sa face d'appui 29.

L'échancrure 28 du bouchon de fermeture 19 permet le passage des conducteurs électriques qui viennent se loger dans les évidements que forment les arcs de cercle 31 et 32. Simultanément l'extrémité inférieure de la paroi 37 vient en butée contre la plaque 16 immobilisant celle-ci en position à l'intérieur du corps 11.

Pour parfaire l'immobilisation de ladite plaque 16, on peut également prévoir sur la face interne du corps 10 des picots (non représentés) répartis angulairement de manière uniforme.

Ainsi qu'on le remarquera, le passage des conducteurs 18 de l'intérieur du corps 11 vers l'extérieur s'effectue sans aucune manipulation particulière de ces derniers.

Le bouchon de fermeture 19 étant mis en place, on constate que l'échancrure 18 constitue avec le corps 11 un logement dont seule la face supérieure est débouchante vers l'extérieur du corps 11.

L'étanchéité désirée s'effectue de manière particulièrement simple en deux opérations successives. Tout d'abord on réalise la solidarisation et l'étanchéité du bouchon de fermeture 19 par rapport au corps 11 par un collage ou une soudure aux ultra-sons qui s'effectue au droit de la périphérie de l'embase 24.

Suivant l'invention la seconde opération consiste à couler de la résine thermodurcissable dans le logement formé par l'échancrure 28.

On réalise ainsi une étanchéité parfaite au droit du passage des conducteurs 18 sans avoir à les manipuler et sans recourir à des organes spéciaux, tels que par exemple des passe-fils.

On appréciera en particulier que toutes ces opérations ne nécessitant plus de manipulations particulières des conducteurs électriques sont parfaitement automatisables.

Dans l'exemple représenté, I'alésage 26 du bouchon de fermeture 19 étant débouchant on complète la protection de l'arbre 13 par un simple capuchon (non représenté) que l'on visse sur le manchon fileté 22.

Bien entendu la présente invention ne se limite pas aux formes de réalisations décrites ou représentées.

En particulier le capteur décrit sert à mesurer la vitesse de rotation, mais il va de soi que l'invention peut s'appliquer à un capteur destiné à toute autre mesure.

## Revendications

1. Capteur de mesure (10) comprenant un corps (11) à l'intérieur duquel tourillonne un arbre (13), un circuit électronique incorporé à une plaque (16) positionnée dans le corps (11), des conducteurs électriques (18) permettant une alimentation électrique et une transmission à distance des signaux dudit circuit électronique et traversant un bouchon de fermeture (19) présentant une collerette (25) et une embase (24) comportant un évidement interne (36), dans lesquelles sont prévus des moyens d'étanchéité, en particulier au droit du passage des conducteurs électriques (18), caractérisé en ce que lesdits moyens d'étanchéité sont constitués d'une échancrure (28) ménagée à la périphérie extérieure de la collerette (25) et de l'embase (24), ladite échancrure (28) ménageant avec l'évidement interne (36) une paroi (37), ladite paroi (37) faisant saillie par rapport à l'embase (24) de manière à venir en butée contre la plaque (16), ladite paroi (37) délimitant avec la paroi du corps (11) et la plaque (16) un logement traversé par lesdits conducteurs (18) et rempli de résine thermodurcissable.

2. Capteur de mesure (10) selon la revendication 1, caractérisé en ce que l'échancrure (28) présente une partie centrale (30, 30′) raccordée à la périphérie extérieure de la collerette (25) et l'embase (24) par des arcs de cercle (31, 32) et des flancs droits (33, 34).

3. Capteur de mesure (10) selon l'une quelconque des revendications précédentes, caractérisé en ce que ladite paroi (37) constitue des moyens de maintien de la plaque (16) dans le corps (11).

## Patentansprüche

1. Meßwertgeber (10), enthaltend einen Körper (11), in dessen Innerem eine Welle (13) drehbar gelagert ist, eine Elektronikschaltung, die auf einer Platte (16) in dem Körper (11) angebracht ist, und elektrische Leiter (18), die eine elektrische Speisung und eine Fernübertragung von Signalen dieser Elektronikschaltung ermöglichen und durch einen Verschlußdeckel (19) hindurchgeführt sind, der einen Flansch (25) und einen Ansatz (24) umfaßt, der eine Innenausnehmung (36) aufweist, in der Dichtungsmittel, insbesondere für die Hindurchführung der elektrischen Leiter (18), vorgesehen sind, dadurch gekennzeichnet, daß die Dichtungsmittel durch eine an der Außenperipherie des Flansches (25) und des Ansatzes (24) angebrachte Aussparung (28) gebildet sind, die mit der Innenausnehmung (36) eine Wand (37) bildet, die gegenüber dem Ansatz (24) vorspringt, derart, daß sie gegen die Platte (16) zur Anlage kommt, wobei die Wand (37) mit der Wand des Körpers (11) und der Platte (16) einen Raum begrenzt, durch den die besagten Leiter (18) hindurchgeführt sind und der mit wärmeaushärtendem Harz gefüllt ist.

2. Meßwertgeber (10) nach Anspruch 1, dadurch gekennzeichnet, daß die Aussparung (28) einen Mittelabschnitt (30, 30′) aufweist, der mit der Außenperipherie des Flansches (25) und des Ansatzes (24) über Kreisbögen (31, 32) und gerade Flächen (33, 34) in Verbindung steht.

3. Meßwertgeber (10) nach einem der vorhergehenden Ansprüche, dadurch gekennzeichnet, daß die besagte Wend (37) Haltemittel für die Platte (16) in dem Körper (11) bildet.

## Claims

1. Measuring sensor (10) comprising a body (11) inside which rotates a shaft (13), an electronic circuit incorporated in a chip (16) positioned in the body (11), electrical leads (18) providing an electrical power supply and a remote transmission of the signals from said electronic circuit and passing through a closing plug (19) comprising a flange (25) and a base (24) having an internal recess (36), in which sealing means are provided, in particular opposite the passage of the electrical leads (18), characterized in that said sealing means are constituted by a channel (28) provided on the outer periphery of the flange (25) and of the base (24), said channel (28) providing with the internal recess (36) a wall (37), said wall (37) projecting with respect to the base (24) in order to come into abutment against the chip (16), said wall (37) defining with the wall of the body (11) and the chip (16) a housing through which said leads (18) pass and which is filled with thermo-setting resin.

2. Measuring sensor (10) according to Claim 1, characterized in that the channel (28) comprises a central part (30, 30′) connected to the outer periphery of the flange (25) and the base (24) by circular arcs (31, 32) and straight sides (33, 34).

3. Measuring sensor (10) according to one of the preceding claims, characterized in that said wall (37) constitutes means for retaining the chip (16) in the body (11).
